# EUROPÄISCHE PATENTSCHRIFT

(11) **EP 3 427 247 B1**
(45) Veröffentlichungstag und Bekanntmachung des Hinweises auf die Patenterteilung: **28.04.2021**
(21) Anmeldenummer: 17709054.5
(22) Anmeldetag: 06.03.2017
(51) Int. Cl.: G09C 1/00, H04L 9/32

(54) **SICHERHEITSMERKMAL FÜR EIN DOKUMENT UND VERFAHREN ZUM ÜBERPRÜFEN EINES SICHERHEITSMERKMALS**
SECURITY FEATURE FOR A DOCUMENT AND METHOD FOR CHECKING A SECURITY FEATURE
SIGNE DE SÉCURITÉ POUR UN DOCUMENT ET PROCÉDÉ POUR CONTRÔLER UN SIGNE DE SÉCURITÉ

(30) Priorität: 09.03.2016 DE 102016104339
(43) Veröffentlichungstag der Anmeldung: 16.01.2019
(73) Patentinhaber: Bundesdruckerei GmbH, 10969 Berlin (DE)
(72) Erfinder: PAESCHKE, Manfred, 16348 Wandlitz (DE); WILKE, Andreas, 13509 Berlin (DE); KOMAROV, Ilya, 10589 Berlin (DE); SIEGMANN, Rebekka, 13353 Berlin (DE)
(74) Vertreter: Patentship Patentanwaltsgesellschaft mbH
(86) Internationale Anmeldenummer: PCT/EP2017/055197
(87) Internationale Veröffentlichungsnummer: WO 2017/153342

(56) Entgegenhaltungen:
- EP-A1- 2 767 395
- EP-A2- 2 230 794
- Bundesamt Für Sicherheit In Der Informationstechnik : Bsi: "Nanotechnologie", , 1. Januar 2007 (2007-01-01), XP055252288, Gefunden im Internet: URL:https://www.bsi.bund.de/ [gefunden am 2016-02-22]
- Jeremy Hatch ET AL: "Switchable Surfaces; Superhydrophilic to Superhydrophobic", , 26. Oktober 2006 (2006-10-26), XP055372070, Gefunden im Internet: URL:http://www.chemistry.illinois.edu/rese arch/materials/seminar_abstracts/2006-2007 /Hatch.abstract_copy.pdf
- GIBSON ET AL: "Vibrations of carbon nanotubes and their composites: A review", COMPOSITES SCIENCE AND TECHNOLOGY, ELSEVIER, AMSTERDAM, NL, Bd. 67, Nr. 1, 11. November 2006 (2006-11-11), Seiten 1-28, XP005761327, ISSN: 0266-3538, DOI: 10.1016/J.COMPSCITECH.2006.03.031
- KONIGSMARK S T CHODEN ET AL: "CNPUF: A Carbon Nanotube-based Physically Unclonable Function for secure low-energy hardware design", 2014 19TH ASIA AND SOUTH PACIFIC DESIGN AUTOMATION CONFERENCE (ASP-DAC), IEEE, 20. Januar 2014 (2014-01-20), Seiten 73-78, XP032570022, DOI: 10.1109/ASPDAC.2014.6742869
- SHAKYA BICKY ET AL: "Harnessing Nanoscale Device Properties for Hardware Security", 2015 16TH INTERNATIONAL WORKSHOP ON MICROPROCESSOR AND SOC TEST AND VERIFICATION (MTV), IEEE, 3. Dezember 2015 (2015-12-03), Seiten 42-47, XP032950298, DOI: 10.1109/MTV.2015.18
- DEEPU ROY ET AL: "Comb Capacitor Structures for On-Chip Physical Uncloneable Function", IEEE TRANSACTIONS ON SEMICONDUCTOR MANUFACTURING, IEEE SERVICE CENTER, PISCATAWAY, NJ, US, Bd. 22, Nr. 1, 1. Februar 2009 (2009-02-01), Seiten 96-102, XP011243327, ISSN: 0894-6507, DOI: 10.1109/TSM.2008.2010738
- Thomas Esbach ET AL: "A New Security Architecture for Smartcards Utilizing PUFs" In: "ISSE 2012 Securing Electronic Business Processes", 1. Januar 2012 (2012-01-01), Springer Fachmedien Wiesbaden, Wiesbaden, XP055325530, ISBN: 978-3-658-00333-3 Seiten 180-194, DOI: 10.1007/978-3-658-00333-3_18, Absatz [03.1]
- Nxp: "PUF-Physical uncloneable functions : Protecting next-generation Smart Cards ICs with SRAM-based PUS", , 1. Oktober 2013 (2013-10-01), XP055313039, Gefunden im Internet: URL:www.nxp.com [gefunden am 2016-10-21]

## Beschreibung

Die vorliegende Erfindung betrifft ein Sicherheitsmerkmal und ein Verfahren zum Überprüfen eines Sicherheitsmerkmals für ein Dokument, insbesondere ein Authentifikationsdokument oder eine Banknote.

Die Druckschrift "Bundesamt Für Sicherheit in Der Informationstechnik: Bsi: "Nanotechnologie", 1. Januar 2007 (2007-01-01), XP055252288, [gefunden am 2016-02-22]" beschreibt einen möglichen Einsatz von OLEDs im Umfeld von deutschen Personalausweisen.

Die Offenlegungsschrift EP 2 230 794 A2 offenbart die Verwendung von sogenannten SHIC-Systemen bei der Erzeugung von Schlüsselpaaren im Rahmen einer Verschlüsselung. Hierbei steht die Abkürzung "SHIC" für "Super High Information Content".

Die Druckschrift "Jeremy Hatch ET AL: "Switchable Surfaces; Superhydrophilic to Superhydrophobic", 26. Oktober 2006 (2006-10-26), XP055372070, Gefunden im Internet: URL:http://www.chemistry.illinois.edu/research/materials/seminar_abstracts/2006-2007/Hatch.abstract_copy.pdf" beschäftigt sich mit dem Themengebiet von superhydrophilen Oberflächen.

Die Druckschrift "GIBSON ET AL: "Vibrations of carbon nanotubes and their composites: A review", COMPOSITES SCIENCE AND TECHNOLOGY, ELSEVIER, AMSTERDAM, NL, Bd. 67, Nr. 1, 11. November 2006 (2006-11-11), Seiten 1-28, XP005761327, ISSN: 0266-3538, DOI: 10.1016/J.COMPSCITECH.2006.03.031" beschreibt Schwingungen in Kohlenstoffnanoröhren.

Die Druckschrift "KONIGSMARK S T CHODEN ET AL: "CNPUF: A Carbon Nanotubebased Physically Unclonable Function for secure low-energy hardware design", 2014 19TH ASIA AND SOUTH PACIFIC DESIGN AUTOMATION CONFERENCE (ASP-DAC), IEEE, 20. Januar 2014 (2014-01-20), Seiten 73-78, XP032570022, DOI: 10.1109/ASPDAC.2014.6742869 [gefunden am 2014-02-18]" beschreibt eine "physical unclonable function" basierend auf Kohlenstoffnanoröhren.

Die Druckschrift "SHAKYA BICKY ET AL: "Harnessing Nanoscale Device Properties for Hardware Security", 2015 16TH INTERNATIONAL WORKSHOP ON MICROPROCESSOR AND SOC TEST AND VERIFICATION (MTV), IEEE, 3. Dezember 2015 (2015-12-03), Seiten 42-47, XP032950298, DOI: 10.1109/MTV.2015.18 [gefunden am 2016-08-22]" beschreibt Eigenschaften von Sicherheitshardware, die auf der Nanotechnologie basiert.

Die Druckschrift "DEEPU ROY ET AL: "Comb Capacitor Structures for On-Chip Physical Uncloneable Function", IEEE TRANSACTIONS ON SEMICONDUCTOR MANUFACTURING, IEEE SERVICE CENTER, PISCATAWAY, NJ, US, Bd. 22, Nr. 1, 1. Februar 2009 (2009-02-01), Seiten 96-102, XP011243327, ISSN: 0894-6507, DOI: 10.1109/TSM.2008.2010738" offenbart Kondensatorstrukturen für eine "physical uncloneable function".

Die Druckschrift "Thomas Esbach ET AL: "A New Security Architecture for Smartcards Utilizing PUFs" in: "ISSE 2012 Securing Electronic Business Processes", 1. Januar 2012 (2012-01-01), Springer Fachmedien Wiesbaden, Wiesbaden, XP055325530, ISBN: 978-3-658-00333-3, Seiten 180-194, DOI: 10.1007/978-3-658-00333-3_18" offenbart eine Sicherheitsarchitektur für Smartkarten.

Die Druckschrift "Nxp: "PUF-Physical uncloneable functions: Protecting next-generation Smart Cards ICs with SRAM-based PUS", 1. Oktober 2013 (2013-10-01), XP055313039 [gefunden am 2016-10-21]" offenbart Smartkarten mit einer "physical uncloneable function".

Ein Dokument wie ein Identifikationsdokument oder eine Banknote weist meist eine Vielzahl an Sicherheitsmerkmalen auf, welche die Authentizität des Dokuments beweisen und eine Fälschung des Dokuments erschweren sollen. Die Sicherheitsmerkmale weisen dabei meist charakteristische Eigenschaften auf, welche bei einer Authentifizierung des Dokuments überprüft werden können.

Idealerweise sind Sicherheitsmerkmale besonders einfach zu Authentifizieren und gleichzeitig besonders schwierig oder unmöglich zu fälschen. Ein Sicherheitsmerkmal zu schaffen, welches diese Eigenschaften umfasst, und gleichzeitig für eine Anbringung an einem Identifikationsdokument oder einer Banknote geeignet ist, ist jedoch schwierig.

Es ist daher die Aufgabe der vorliegenden Erfindung, ein effizientes Konzept für ein Sicherheitsmerkmal zur Anbringung an einem Dokument zu schaffen, welches besonders effizient überprüft werden kann und besonders schwierig zu duplizieren ist.

Gemäß einem ersten Aspekt betrifft die Erfindung ein Sicherheitsmerkmal für ein Dokument, mit einer Trägerschicht, und einer Molekularschicht, welche auf der Trägerschicht angeordnet ist, wobei die Molekularschicht durch ein Stimulationsfeld in einen Anregungszustand versetzbar ist, und wobei eine charakteristische Eigenschaft des Sicherheitsmerkmals durch die Änderung des Anregungszustandes ansprechend auf eine Änderung des Stimulationsfeldes bestimmt ist. Dadurch wird der Vorteil erreicht, dass ein Sicherheitsmerkmal mit einer einzigartigen und schwer zu kopierenden oder zu fälschenden charakteristischen Eigenschaft geschaffen werden kann.

Das Sicherheitsmerkmal und/oder die charakteristische Eigenschaft des Sicherheitsmerkmals können eine physikalisch unklonbare Funktion (physical unclonable function, PUF) bilden. Das Sicherheitsmerkmal kann auf oder an dem Dokument angeordnet sein, und kann zur Authentifizierung des Dokuments, beispielsweise zum Verifizieren der Echtheit des Dokuments, eingesetzt werden. Das Sicherheitsmerkmal kann ferner auf oder an einem Gegenstand, beispielsweise einem technisches Gerät, wie einem Smartphone oder einem Laptop, oder einem Zier- oder Luxusgegenstand, wie Schmuck oder einer Uhr, angeordnet sein, und kann zur Authentifizierung, insbesondere zur Überprüfung der Echtheit, des Gegenstandes eingesetzt werden.

Das Dokument kann eine ID-Karte oder eine Smartcard, sein. Das Dokument kann ferner eines der folgenden Authentifikationsdokumente sein: Identifikationsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Dokument kann ferner einen elektronisch auslesbaren Schaltkreis, beispielsweise einen RFID-Chip umfassen. Das Dokument kann ein- oder mehrlagig bzw. papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Gemäß einer Ausführungsform ist das Stimulationsfeld ein elektrisches Stimulationsfeld, ein elektrostatisches Stimulationsfeld, ein magnetisches Stimulationsfeld oder ein elektromagnetisches Stimulationsfeld. Die Anregungen der Molekularschicht mit dem Stimulationsfeld kann eine rein elektrische Anregung, eine rein magnetische Anregung und/oder eine Kombination aus beiden Anregungen umfassen.

Die Änderung des Stimulationsfeldes kann ein Verringern, insbesondere ein Deaktivieren oder ein Ausschalten, des Stimulationsfeldes umfassen. Das Stimulationsfeld kann durch einen Spannungspuls erzeugt werden.

Gemäß einer Ausführungsform weist die Molekularschicht eine Mehrzahl von orientierten Molekülen oder Polymerketten auf, welche auf der Trägerschicht angeordnet und chemisch oder physikalisch mit der Trägerschicht gebunden sind. Die orienteierten Moleküle und/oder Polymerketten können mit jeweils einem Ende mit der Trägerschicht verankert sein. Die orientierten Molekülen und/oder Polymerketten können zufällige auf der Trägerschicht angeordnet sein.

Die orientierten Moleküle und/oder Polymerketten können elektrisch geladen sein. Die orientierten Moleküle und/oder Polymerketten können als längliche Ketten oder Kettenstrukturen ausgebildet sein, wobei die Ketten oder Kettenstrukturen mechanisch flexibel oder steif sein können. Die Polymerketten können synthetische Polymere, beispielsweise Alkylketten mit weiteren funktionalen Gruppen, umfassen. Die Polymerketten können ferner natürliche Polymere wie beispielsweise DNA umfassen. Das nicht auf der Trägerschicht verankerte Ende der Moleküle oder Polymerketten kann von der Trägerschicht abstehen.

Die orientierten Moleküle und/oder Polymerketten können mittels kovalenter Bindungen, ionischer Bindungen, van-der-Waals Bindungen, Wasserstoffbrückenbindungen oder Adsorption auf der Trägerschicht verbunden bzw. verankert sein. Ferner können die orientierten Moleküle und/oder Polymerketten mit Linkermolekülen, insbesondere Thiole, welche an einem Ende der orientierten Moleküle und/oder Polymerketten angeordnet sind, auf der Trägerschicht verankert sein. Die Bindung der orientierten Moleküle und/oder Polymerketten kann mittels Chemisorption oder Physisorption erfolgen

Gemäß einer Ausführungsform sind die Polymerketten oder orientierten Moleküle ansprechend auf das Stimulationsfeld aus einer Ruhelage auslenkbar und sind ausgebildet, bei einer Verringerung des Stimulationsfeldes in die Ruhelage zurückkehren, wobei die charakteristische Eigenschaft durch die Rückkehr der orientierten Moleküle und/oder Polymerketten in die Ruhelage festgelegt ist. Dadurch wird der Vorteil erreicht, dass eine charakteristische Eigenschaft geschaffen werden kann, welche einzigartig und/oder schwer zu kopieren oder zu fälschen ist.

Die genaue Bewegung der Polymerketten oder orientierten Moleküle bei der Rückkehr in die Ruhelage kann von einer Vielzahl von Faktoren abhängen, insbesondere der Art der Moleküle oder Polymerketten, der Länger der Moleküle oder Polymerketten und der Dichte bzw. der Verteilung der Mehrzahl von Molekülen oder Polymerketten auf der Trägerschicht. Aufgrund der großen Zahl von Molekülen oder Polymerketten auf der Trägerschicht kann sich daraus ein einzigartiges und schwer zu kopierendes Bewegungsmuster ergeben, welches eine charakteristische Eigenschaft der Molekularschicht darstellt.

Gemäß einer Ausführungsform bewirkt die Änderung des Stimulationsfeldes eine Änderung der Orientierung von Dipolmomenten und damit eine Änderung der Orientierung der Moleküle oder Polymerketten, wobei die Änderung der Dipolmomente die charakteristische Eigenschaft des Sicherheitsmerkmals bestimmt. Dadurch wird der Vorteil erreicht, dass eine charakteristische Eigenschaft geschaffen werden kann, welche einzigartig und/oder schwer zu kopieren oder zu fälschen ist.

Die Änderung der Dipolmomente der Moleküle oder Polymerketten kann eine Änderung der dielektrischen Funktion der Moleküle oder Polymerketten in Abhängigkeit der Änderung des Stimulationsfeldes bewirken. Die charakteristische Eigenschaft kann durch die Änderung der dielektrischen Funktion der Moleküle oder Polymerketten festgelegt sein.

Gemäß einer Ausführungsform ist die Trägerschicht eine Metallschicht, insbesondere eine Gold- oder Silberschicht, eine leitende Oxidschicht, eine dielektrische Schicht, eine Kunststoffschicht, insbesondere eine Polycarbonat-Schicht, oder eine Halbleiterschicht.

Gemäß einer Ausführungsform umfasst das Sicherheitsmerkmal ein dielektrisches Gehäuse, das die Trägerschicht und die Molekularschicht umgibt. Dadurch wird der Vorteil erreicht, dass die Molekularschicht effizient vor Beschädigungen oder ungewollten äußeren Beeinflussungen geschützt werden kann.

Gemäß einer Ausführungsform bewirkt die Änderung des Anregungszustandes der Molekularschicht eine Änderung einer elektrisch erfassbaren Größe, insbesondere eines elektromagnetischen Feldes, wobei die charakteristische Eigenschaft durch Erfassung der Änderung der elektrisch erfassbaren Größe erfassbar ist. Dadurch wird der Vorteil erreicht, dass die charakteristische Eigenschaft effizient erfasst werden kann. Die elektrisch erfassbare Größe kann eine Feldstärke des Stimulationsfeldes oder eine dem Stimulationsfeld zugeordnete elektrische Spannung sein.

Gemäß einem zweiten Aspekt betrifft die Erfindung ein Dokument, insbesondere ein Authentifikationsdokument oder eine Banknote, mit einem Dokumentenkörper, und dem Sicherheitsmerkmal nach dem ersten Aspekt der Erfindung, wobei das Sicherheitsmerkmal mit dem Dokumentenkörper verbunden ist. Dadurch wird der Vorteil erreicht, dass ein Dokument geschaffen werden kann, welches ein Sicherheitsmerkmal mit einer einzigartigen und schwer zu kopierenden oder zu fälschenden charakteristischen Eigenschaft umfasst.

Der Dokumentenkörper kann als Kartenkörper ausgebildet sein, oder kann einen Kartenkörper umfassen.

Das Dokument kann eine ID-Karte oder eine Smartcard, sein. Das Dokument kann ferner eines der folgenden Authentifikationsdokumente sein: Identifikationsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Dokument kann ferner einen elektronisch auslesbaren Schaltkreis, beispielsweise einen RFID-Chip umfassen. Das Dokument kann ein- oder mehrlagig bzw. papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Gemäß einer Ausführungsform ist das Sicherheitsmerkmal flächig über eine Breite des Dokumentenkörpers gebildet.

Gemäß einer Ausführungsform ist der Dokumentenkörper aus Materialschichten geformt, wobei das Sicherheitsmerkmal zwischen zwei Materialschichten angeordnet ist, oder wobei das Sicherheitsmerkmal auf einer Oberfläche des Dokumentenkörpers oder in einer Vertiefung der Oberfläche des Dokumentenkörpers, insbesondere in einem dielektrischen Gehäuse, angeordnet ist. Dadurch wird der Vorteil erreicht, dass eine effiziente und stabile Anordnung des Sicherheitsmerkmals auf oder in dem Dokumentenkörper erfolgen kann.

Gemäß einer Ausführungsform ist das Sicherheitsmerkmal in einem Gehäuse zwischen zwei aufeinanderfolgenden Materialschichten des Dokumentenkörpers eingebettet, insbesondere einlaminiert, oder bildet eine bestimmte Materialschicht des Dokumentenkörpers die Trägerschicht des Sicherheitsmerkmals. Dadurch wird der Vorteil erreicht, dass eine effiziente und stabile Anordnung des Sicherheitsmerkmals auf oder in dem Dokumentenkörper erfolgen kann.

Die bestimmte Materialschicht kann eine Metallschicht, insbesondere eine Goldschicht, eine dielektrische Schicht, eine Kunststoffschicht, insbesondere eine Polycarbonat-Schicht, oder eine Halbleiterschicht sein.

Gemäß einer Ausführungsform umfassen die Materialschichten Kunststoffschichten, insbesondere laminierte Polycarbonat-Schichten.

Gemäß einer Ausführungsform ist die Trägerschicht durch eine Kunststoffschicht des Dokumentenkörpers gebildet.

Gemäß einer Ausführungsform ist das Sicherheitsmerkmal zwischen zwei Elektroden angeordnet, wobei das Stimulationsfeld durch Anlegen einer elektrischen Spannung an die Elektroden erzeugbar ist. Dadurch wird der Vorteil erreicht, dass das Stimulationsfeld effizient erzeugt werden kann.

Gemäß einem dritten Aspekt betrifft die Erfindung ein Verfahren zum Überprüfen eines Sicherheitsmerkmals nach dem ersten Aspekt der Erfindung, mit Beaufschlagen des Sicherheitsmerkmals mit einem Stimulationsfeld in einem ersten Zeitintervall, um die Molekularschicht des Sicherheitsmerkmals in einen Anregungszustand zu versetzen, Änderung des Stimulationsfeldes in einem zweiten Zeitintervall, und Erfassen einer elektrischen Eigenschaft des Sicherheitsmerkmals in dem zweiten Zeitintervall. Dadurch wird der Vorteil erreicht, dass ein Sicherheitsmerkmal mit einer einzigartigen und schwer zu kopierenden oder zu fälschenden charakteristischen Eigenschaft effizient überprüft werden kann. Die Überprüfung kann im Rahmen einer Authentifizierung, insbesondere einer Verifizierung, des Sicherheitsmerkmals oder eines Gegenstandes, welcher das Sicherheitsmerkmal aufweist, erfolgen.

Das Stimulationsfeld kann ein elektromagnetisches Feld umfassen. Die Änderung des Stimulationsfeldes kann ein Verringern, insbesondere ein Deaktivieren oder ein Ausschalten, des Stimulationsfeldes umfassen. Das Stimulationsfeld kann durch einen Spannungspuls erzeugt werden.

Die Erfindung kann in Software und/oder Hardware realisiert werden.

Weitere Ausführungsformen der vorliegenden Erfindung werden Bezug nehmend auf die beigefügten Zeichnungen beschrieben. Es zeigen:
- Fig. 1: eine schematische Darstellung eines Sicherheitsmerkmals;
- Fig. 2a: eine schematische Darstellung von Polymerketten im Ruhezustand;
- Fig. 2b: eine schematische Darstellung von Polymerketten nach Anlegen eines Stimulationsfeldes;
- Fig. 2c: eine schematische Darstellung von Polymerketten nach Änderung eines Stimulationsfeldes;
- Fig. 2d: einen schematischen Verlauf einer elektrischen Spannung zur Erzeugung eines Stimulationsfeldes;
- Fig. 3: eine schematische Darstellung eines Dokuments mit einem Sicherheitsmerkmal; und
- Fig. 4: ein Ablaufdiagramm eines Verfahrens zum Überprüfen eines Sicherheitsmerkmals.

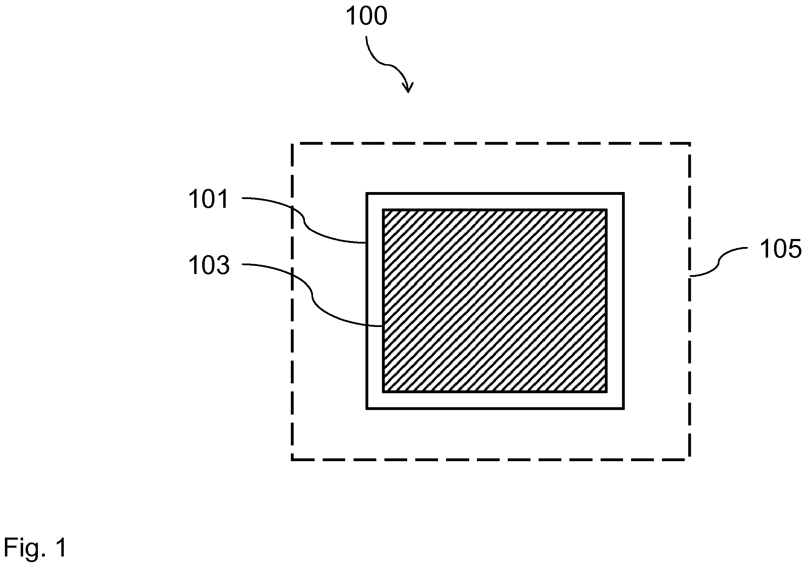

Fig. 1 zeigt eine schematische Darstellung eines Sicherheitsmerkmals 100 gemäß einer Ausführungsform.

Das Sicherheitsmerkmal 100 umfasst eine Trägerschicht 101, und eine Molekularschicht 103, welche auf der Trägerschicht 101 angeordnet ist, wobei die Molekularschicht 103 durch ein Stimulationsfeld in einen Anregungszustand versetzbar ist, und wobei eine charakteristische Eigenschaft des Sicherheitsmerkmals 100 durch die Änderung des Anregungszustandes ansprechend auf eine Änderung des Stimulationsfeldes bestimmt ist.

Das Sicherheitsmerkmal 100 und/oder die charakteristische Eigenschaft des Sicherheitsmerkmals 100 können eine physikalisch unklonbare Funktion (physical unclonable function, PUF) bilden. Das Sicherheitsmerkmal 100 kann auf oder an dem Dokument angeordnet sein, und kann zur Authentifizierung des Dokuments, beispielsweise zum Verifizieren der Echtheit des Dokuments, eingesetzt werden. Das Sicherheitsmerkmal kann ferner auf oder an einem Gegenstand, beispielsweise einem technisches Gerät, wie einem Smartphone oder einem Laptop, oder einem Zier- oder Luxusgegenstand, wie Schmuck oder einer Uhr, angeordnet sein, und kann zur Authentifizierung, insbesondere zur Überprüfung der Echtheit, des Gegenstandes eingesetzt werden.

Das Stimulationsfeld kann ein elektromagnetisches Feld umfassen. Die Änderung des Stimulationsfeldes kann ein Verringern, insbesondere ein Deaktivieren oder ein Ausschalten, des Stimulationsfeldes umfassen. Das Stimulationsfeld kann durch einen Spannungspuls erzeugt werden.

Die Trägerschicht 101 kann eine Metallschicht, insbesondere eine Goldschicht, eine dielektrische Schicht, eine Kunststoffschicht, insbesondere eine Polycarbonat-Schicht, oder eine Halbleiterschicht sein. Die Trägerschicht kann ferner ein Indiumzinnoxid (ITO) oder ein Zinkoxid (ZnO) oder eine flexible Schicht, insbesondere aus Poly(3,4-ethylendioxythiophen) Polystyrolsulfonat (PEDOT:PSS), umfassen.

Das Sicherheitsmerkmal in Fig. 1 umfasst ferner ein Gehäuse 105.

Das Gehäuse 105 kann ein dielektrisches Gehäuse sein, welches die Trägerschicht 101 und die Molekularschicht 103 umgibt. Das Gehäuse 105 kann druck- und/oder wasserdicht ausgebildet sein.

Das Gehäuse 105 kann mit einer Flüssigkeit, insbesondere einer ionischen Flüssigkeit oder einer Salzlösung wie einer NaCI-Lösung, gefüllt sein. Das Gehäuse kann ferner mit Luft gefüllt sein, oder kann ein Vakuum enthalten.

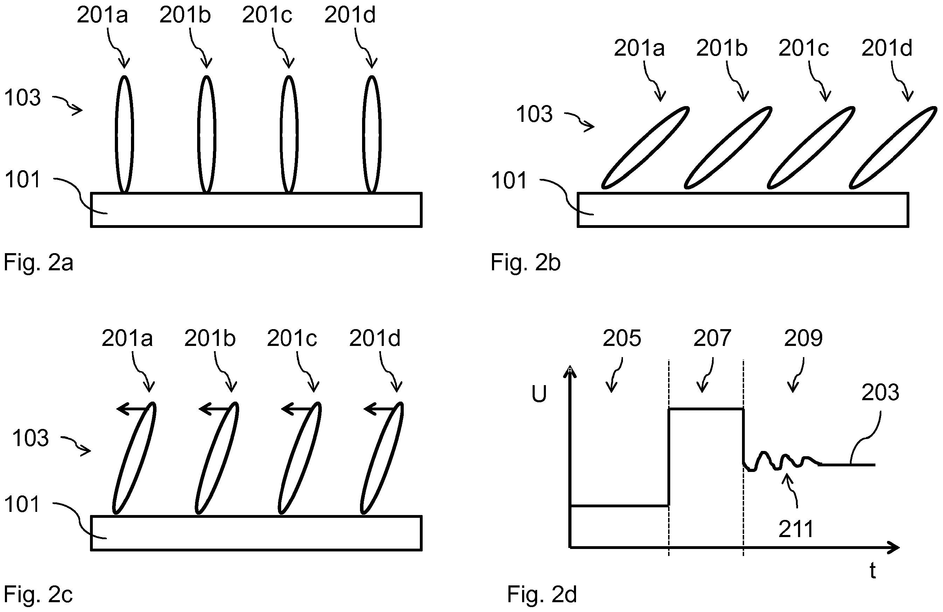

Fig. 2a bis Fig. 2c zeigen schematische Darstellung von Polymerketten 201a-d gemäß einer Ausführungsform, welche in Abhängigkeit eines Stimulationsfeldes unterschiedlich stark ausgelenkt sind.

Die Polymerketten 201a-d in Fig. 2a-c können die Molekularschicht 103 des Sicherheitsmerkmals 100 bilden.

Die Polymerketten 201a-d können jeweils eine funktionale Oberflächengruppe, einen Spacer und eine funktionale Kopfgruppe umfassen. Die funktionale Kopfgruppe kann ein Linkermolekül, insbesondere Thiole, umfassen. Die funktionale Kopfgruppe kann ferner-SiCl₃, -Si(OCH₃)₃, -Si(OC₂H₅)₃ oder ähnliche Verbindungen umfassen. Der Spacer kann eine Alkylkette umfassen. Die funktionale Oberflächengruppe kann beispielsweise Alkohole, Ketone oder Aldehyde umfassen.

Die Polymerketten 201a-d können elektrisch geladen sein. Die Polymerketten 201a-d können mechanisch flexibel oder steif sein. Insbesondere kann die mechanische Flexibilität der Polymerketten 201a-d von ihrer Länge und/oder ihrer elektrischen Ladung abhängen. Die Polymerketten 201a-d können synthetische Polymere, beispielsweise Alkylketten mit weiteren funktionalen Gruppen, oder natürlichen Polymere, beispielsweise DNA, umfassen.

Gemäß einer Ausführungsform sind die Polymerketten 201a-d mittels kovalenter Bindungen, ionischer Bindungen, van-der-Waals Bindungen, Wasserstoffbrückenbindungen oder Adsorption auf der Trägerschicht 101 verankert. Ferner können die Polymerketten 201a-d Linkermoleküle, insbesondere Thiole, umfassen, welche an einem Ende der Polymerketten 201a-d angeordnet sind, und welche die jeweiligen Polymerketten 201a-d auf der Trägerschicht 101 verankern. Das nicht auf der Trägerschicht 101 verankerte Ende der Polymerketten 201a-d kann, wie in Fig. 2a-c gezeigt, von der Trägerschicht 101 abstehen.

Der Artikel S. Onclin, et al. "Engineering silicon oxide surfaces using self-assembled monolayers." Angew. Chem. Int. Ed., 44, p. 628-6304, 2005 beschreibt beispielsweise vergleichbare funktionalisierte molekulare Monolayer, welche eine Dicke von nur wenigen Nanometern aufweisen, und welche mit verschiedenen Herstellungsverfahren erzeugt werden können.

Das Stimulationsfeld kann durch Anlegen einer elektrischen Spannung an zwei Elektroden erzeugt werden. Die zwei Elektroden können auf gegenüberliegenden Seiten der Molekularschicht 103 angeordnet sein.

Fig. 2d zeigt einen schematischen Verlauf einer elektrischen Spannung 203, welche zur Erzeugung des Stimulationsfeldes mittels zweier Elektroden verwendet wird.

Der Spannungsverlauf in Fig. 2d ist in drei Zeitabschnitte 205, 207, 209 unterteilt, wobei jeweils ein Zeitabschnitt 205, 207, 209 einer der in den Fig. 2a-c gezeigten Auslenkungen der Polymerketten 201a-d zugeordnet ist.

Während des ersten Zeitabschnitts 205 ist keine Spannung an die Elektroden angelegt, so dass kein Stimulationsfeld erzeugt wird. Ohne das Stimulationsfeld befinden sich die Polymerketten 201a-d, wie in Fig. 2a gezeigt, in einem Ruhezustand. Die Polymerketten 201a-d im Ruhezustand stehen beispielsweise senkrecht von der Trägerschicht 101 ab, aufgrund von gegenseitiger Abstoßung der gleich geladenen Polymerketten 201a-d.

Während des zweiten Zeitabschnitts 207 werden die Elektroden mit einer konstanten Spannung beaufschlagt. Die konstante Spannung verursacht ein konstantes Stimulationsfeld, welches eine Auslenkung der Polymerketten 201a-d aus ihrem Ruhezustand, wie in Fig. 2b gezeigt, verursacht. Die Auslenkung der Polymerketten 201a-d erfolgt beispielsweise aufgrund einer Coulomb-Kraft, welche bei angelegtem elektromagnetischem Stimulationsfeld auf die elektrisch geladenen Polymerketten 201a-d wirkt.

Während des dritten Zeitabschnitts 209 in Fig. 2d wird die Spannung auf einen konstanten geringeren Spannungswert reduziert. Die Kraft, welche die Auslenkung der Polymerketten 201a-d bewirkt wird daraufhin verringert, was eine Rückkehr der Polymerketten 201a-d in die Ruhelage bzw. in eine weniger stark ausgelenkte Position verursacht. Diese Rückbewegung ist in Fig. 2c gezeigt. Bei der Rückkehr in die Ruhelage schwingen bzw. oszillieren die Polymerketten 201a-d beispielsweise kollektiv, analog zu einer Vielzahl an physikalischen Pendeln.

Die Bewegung, insbesondere die kollektive Oszillation, der Polymerketten 201a-d in dem dritten Zeitabschnitt 209 kann eine charakteristische zeitliche und spektrale Veränderung des Stimulationsfeldes bewirken. Beispielsweise ist die dielektrische Funktion der Molekularschicht 103 von der Ausrichtung der Polymerketten 201a-d abhängig. Die Oszillation der Polymerketten 201a-d bei ihrer Rückkehr in den Ruhezustand kann gleichsam eine Oszillation der dielektrischen Funktion der Molekularschicht 103 verursachen. Das Stimulationsfeld und die angelegte elektrische Spannung 203 können durch die Oszillation der dielektrischen Funktion der Molekularschicht 103 beeinflusst, insbesondere moduliert, werden.

Eine Indizierung einer kollektive Bewegung einer Molekülschicht auf einer Oberfläche mittels eines elektrischen Feldes und die makroskopische Erfassung dieser Bewegung ist beispielsweise in Lahann, Joerg, et al. "A reversibly switching surface." Science 299(5605), p. 371-374, 2003 offenbart.

Fig. 2d zeigt die durch die kollektive Oszillation der Polymerketten 201a-d verursachte Modulation 211 der elektrischen Spannung 203 im dritten Zeitabschnitt 209. Die charakteristische Eigenschaft des Sicherheitsmerkmals kann als diese Modulation 211 der elektrischen Spannung 203 bzw. des Stimulationsfeldes erfasst werden.

Die Charakteristik der Modulation 211 hängt von der kollektiven Bewegung der Mehrzahl an Polymerketten 201a-d bei der Rückkehr in die Ruhelage ab. Diese Bewegung kann durch eine Vielzahl von Faktoren, insbesondere die Art der Polymerketten 201a-d, die Länge der Polymerketten 201a-d und die Dichte bzw. die Verteilung der Polymerketten 201a-d auf der Trägerschicht 101, beeinflusst werden. Daraus ergibt sich ein für jede Molekularschicht 103 einzigartiges und schwer zu kopierendes Bewegungsmuster, welches die charakteristische Eigenschaft der Molekularschicht und die Modulation 211 festlegt.

Gemäß einer Ausführungsform bewirkt die Änderung des Anregungszustandes der Molekularschicht 103 eine Änderung einer elektrisch erfassbaren Größe, insbesondere eines elektromagnetischen Feldes, wobei die charakteristische Eigenschaft durch Erfassung der Änderung der elektrisch erfassbaren Größe erfassbar ist.

Gemäß einer Ausführungsform umfasst die Änderung des Stimulationsfeldes in dem dritten Zeitabschnitt 209 ein Verringern, insbesondere ein Deaktivieren oder ein Ausschalten, des Stimulationsfeldes.

Gemäß einer Ausführungsform umfasst der Spannungsverlauf 203 einen Spannungspuls, insbesondere einen rechteckigen Spannungspuls, und/oder wird das Stimulationsfeld durch einen Spannungspuls erzeugt.

Gemäß einer Ausführungsform bewirkt der Spannungspuls eine Phononenanregung in der Molekularschicht 103.

Gemäß einer Ausführungsform bewirkt die Änderung des Stimulationsfeldes eine Änderung von Dipolmomenten, insbesondere von elektrischen oder magnetischen Dipolmomenten, der Molekularschicht 103. Die Änderung der Dipolmomente kann die charakteristische Eigenschaft des Sicherheitsmerkmals 100 bestimmen. Dabei kann die Änderung der Dipolmomente der Molekularschicht 103, insbesondere der oszillierenden Moleküle oder Polymerketten 201a-d, eine charakteristische Veränderung eines elektrischen Feldes, insbesondere des Stimulationsfeldes, verursachen.

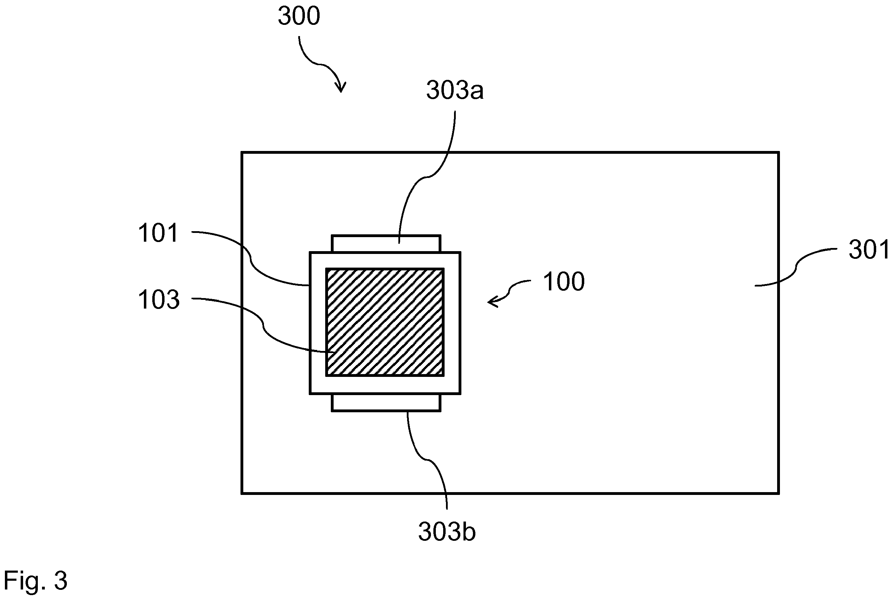

Fig. 3 zeigt ein Dokument 300 mit dem Sicherheitsmerkmal 100 gemäß einer Ausführungsform.

Das Dokument 300 umfasst einen Dokumentenkörper 301, wobei das Sicherheitsmerkmal 100 mit dem Dokumentenkörper 301 verbunden ist. Das Gehäuse 105 aus Fig. 1 ist in Fig. 3 nicht gezeigt.

Der Dokumentenkörper 301 kann als Kartenkörper ausgebildet sein, oder kann einen Kartenkörper umfassen.

Das Dokument 300 kann eine ID-Karte oder eine Smartcard, sein. Das Dokument 300 kann ferner eines der folgenden Authentifikationsdokumente sein: Identifikationsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Dokument 300 kann ferner einen elektronisch auslesbaren Schaltkreis, beispielsweise einen RFID-Chip umfassen. Das Dokument 300 kann ein- oder mehrlagig bzw. papier- und/oder kunststoffbasiert sein. Das Dokument 300 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das Sicherheitsmerkmal 100 kann flächig über eine Breite des Dokumentenkörpers 301 gebildet sein.

Der Dokumentenkörper 301 des Dokuments 300 kann aus Materialschichten geformt sein, wobei das Sicherheitsmerkmal 100 zwischen zwei Materialschichten angeordnet ist. Ferner kann das Sicherheitsmerkmal 100 auf einer Oberfläche des Dokumentenkörpers 301 oder in einer Vertiefung der Oberfläche des Dokumentenkörpers 301 angeordnet sein. Das Sicherheitsmerkmal kann dabei in dem dielektrischen Gehäuse 105 aus Fig. 1 angeordnet sein.

Das Dokument 300 in Fig. 3 umfasst ferner zwei Elektroden 303a-b. Die Elektroden 303ab können ausgebildet sein das Stimulationsfeld durch Anlegen einer elektrischen Spannung an die Elektroden 303a-b zu erzeugen. Die Elektroden 303a-b können an jeweils gegenüberliegenden Seiten der Trägerschicht 101 bzw. der Molekularschicht 103 angeordnet sein.

Das Dokument 300 kann ferner eine Energieversorgungsschnittstelle oder einen Energiespeicher umfassen. Über die Energieversorgungsschnittstelle oder den Energiespeicher kann die benötigte elektrische Energie zur Erzeugung des Stimulationsfeldes bereitgestellt werden.

Gemäß einer Ausführungsform ist das Sicherheitsmerkmal 100 zwischen zwei aufeinanderfolgenden Materialschichten des Dokumentenkörpers 301 eingebettet, insbesondere einlaminiert.

Gemäß einer weiteren Ausführungsform bildet eine bestimmte Materialschicht des Dokumentenkörpers 301 die Trägerschicht 101 des Sicherheitsmerkmals 100. Die bestimmte Materialschicht kann eine Metallschicht, insbesondere eine Goldschicht, eine dielektrische Schicht, eine Kunststoffschicht, insbesondere eine Polycarbonat-Schicht, oder eine Halbleiterschicht sein.

Gemäß einer Ausführungsform umfassen die Materialschichten des Dokuments 300 Kunststoffschichten, insbesondere laminierte Polycarbonat-Schichten. Gemäß einer weiteren Ausführungsform ist die Trägerschicht 101 des Sicherheitsmerkmals 100 durch eine Kunststoffschicht des Dokumentenkörpers 301 gebildet.

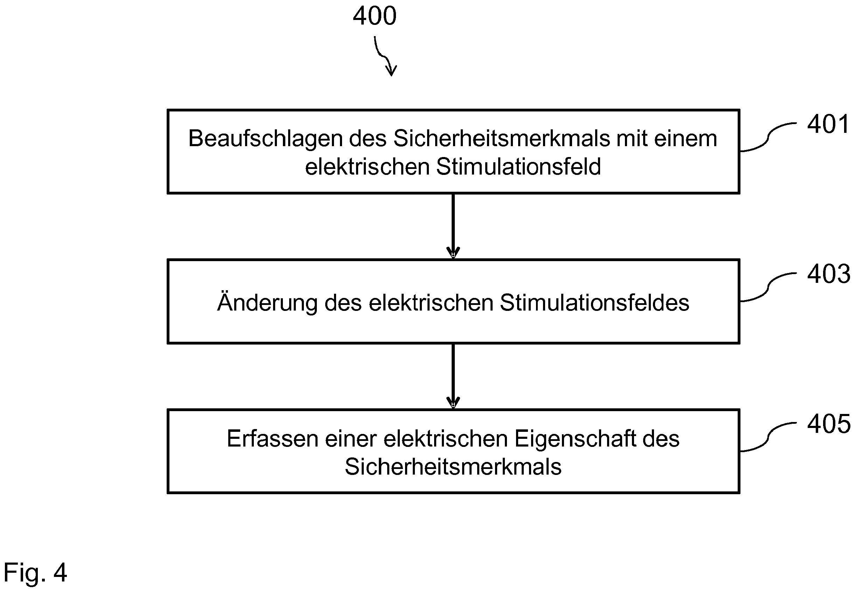

Fig. 4 zeigt ein Ablaufdiagramm eines Verfahrens 400 zum Überprüfen des Sicherheitsmerkmals 100.

Das Verfahren 400 umfasst ein Beaufschlagen 401 des Sicherheitsmerkmals 100 mit einem elektromagnetischen Stimulationsfeld in einem ersten Zeitintervall, um die Molekularschicht 103 des Sicherheitsmerkmals 100 in einen Anregungszustand zu versetzen, eine Änderung 403 des Stimulationsfeldes in einem zweiten Zeitintervall, und ein Erfassen 405 einer elektrischen Eigenschaft des Sicherheitsmerkmals 100 in dem zweiten Zeitintervall. Das erste Zeitintervall kann dem zweiten Zeitabschnitt in Fig. 2d entsprechen, und das zweite Zeitintervall kann dem dritten Zeitabschnitt in Fig. 2d entsprechen.

Mit dem Verfahren 400 kann das Sicherheitsmerkmal 100 oder ein mit dem Sicherheitsmerkmal 100 versehener Gegenstand, insbesondere das Dokument 300, überprüft werden. Die Überprüfung kann im Rahmen einer Authentifizierung, insbesondere einer Verifizierung, des Sicherheitsmerkmals 100 oder des Gegenstandes, welcher das Sicherheitsmerkmal aufweist, erfolgen.

Gemäß einer Ausführungsform ist das Sicherheitsmerkmal 100 ein passives Sicherheitsmerkmal für Sicherheitsdokumente und/oder Banknoten.

Gemäß einer weiteren Ausführungsform ermöglicht das Sicherheitsmerkmal 100 und das Verfahren 400 ein zerstörungsfreies Vermessen von Schichtsystemen, die insbesondere Moleküle oder Polymere mit elektrischen oder magnetischen Momenten umfassen.

### Bezugszeichenliste

- 100: Sicherheitsmerkmal
- 101: Trägerschicht
- 103: Molekularschicht
- 105: Gehäuse

- 201a-d: Polymerketten
- 203: elektrische Spannung
- 205: erster Zeitabschnitt
- 207: zweiter Zeitabschnitt
- 209: dritter Zeitabschnitt
- 211: Modulation

- 300: Dokument
- 301: Dokumentenkörper
- 303a-b: Elektroden

- 400: Verfahrens zum Überprüfen eines Sicherheitsmerkmals
- 401: Beaufschlagen
- 403: Änderung
- 405: Erfassen

## Patentansprüche

1. Sicherheitsmerkmal (100) für ein Dokument (300), mit:
einer Trägerschicht (101); und
einer Molekularschicht (103), welche auf der Trägerschicht (101) angeordnet ist, wobei die Molekularschicht (103) durch ein Stimulationsfeld in einen Anregungszustand versetzbar ist, und wobei eine charakteristische Eigenschaft des Sicherheitsmerkmals (100) durch die Änderung des Anregungszustandes ansprechend auf eine Änderung des Stimulationsfeldes bestimmt ist, wobei die Molekularschicht (103) eine Mehrzahl von Polymerketten (201a-d) oder orientierten Molekülen aufweist, welche auf der Trägerschicht (101) angeordnet und chemisch oder physikalisch mit der Trägerschicht gebunden sind, wobei die orientierten Moleküle oder Polymerketten (201a-d) ansprechend auf das Stimulationsfeld aus einer Ruhelage auslenkbar und ausgebildet sind, bei einer Verringerung des Stimulationsfeldes in die Ruhelage zurückkehren, und wobei die charakteristische Eigenschaft durch die Rückkehr der orientierten Moleküle oder Polymerketten (201a-d) in die Ruhelage festgelegt ist.

2. Sicherheitsmerkmal (100) nach Anspruch 1, wobei das Stimulationsfeld ein elektrisches Stimulationsfeld, ein elektrostatisches Stimulationsfeld, ein magnetisches Stimulationsfeld oder ein elektromagnetisches Stimulationsfeld ist.

3. Sicherheitsmerkmal (100) nach Anspruch 1 oder 2, wobei eine Änderung des Stimulationsfeldes eine Änderung der Orientierung von Dipolmomenten und damit eine Änderung der Orientierung der orientierten Moleküle oder Polymerketten (201a-d) bewirkt, und wobei die Änderung der Dipolmomente die charakteristische Eigenschaft des Sicherheitsmerkmals (100) bestimmt.

4. Sicherheitsmerkmal (100) nach einem der vorstehenden Ansprüche, wobei die Trägerschicht (101) eine Metallschicht, insbesondere eine Gold- oder Silberschicht, eine leitende Oxidschicht, eine dielektrische Schicht, eine Kunststoffschicht, insbesondere eine Polycarbonat-Schicht, oder eine Halbleiterschicht ist.

5. Sicherheitsmerkmal (100) nach einem der vorstehenden Ansprüche, das ferner ein dielektrisches Gehäuse (105) umfasst, das die Trägerschicht (101) und die Molekularschicht (103) umgibt.

6. Sicherheitsmerkmal (100) nach einem der vorstehenden Ansprüche, wobei die Änderung des Anregungszustandes der Molekularschicht (103) eine Änderung einer elektrisch erfassbaren Größe, insbesondere eines elektromagnetischen Feldes bewirkt, und wobei die charakteristische Eigenschaft durch Erfassung der Änderung der elektrisch erfassbaren Größe erfassbar ist.

7. Dokument (300), insbesondere ein Authentifikationsdokument oder eine Banknote, mit:
einem Dokumentenkörper (301); und
dem Sicherheitsmerkmal (100) nach einem der vorstehenden Ansprüche 1 bis 6, wobei das Sicherheitsmerkmal (100) mit dem Dokumentenkörper (301) verbunden ist.

8. Dokument (300) nach Anspruch 7, wobei das Sicherheitsmerkmal (100) flächig über eine Breite des Dokumentenkörpers (301) gebildet ist.

9. Dokument (300) nach Anspruch 7 oder 8, wobei der Dokumentenkörper (301) aus Materialschichten geformt ist, und wobei das Sicherheitsmerkmal (100) zwischen zwei Materialschichten angeordnet ist, oder wobei das Sicherheitsmerkmal (100) auf einer Oberfläche des Dokumentenkörpers (301) oder in einer Vertiefung der Oberfläche das Dokumentenkörpers (301), insbesondere in einem dielektrischen Gehäuse (105), angeordnet ist.

10. Dokument (300) nach Anspruch 9, wobei das Sicherheitsmerkmal (100) in einem Gehäuse (105) zwischen zwei aufeinanderfolgenden Materialschichten des Dokumentenkörpers (301) eingebettet, insbesondere einlaminiert, ist, oder wobei eine bestimmte Materialschicht des Dokumentenkörpers (301) die Trägerschicht (101) des Sicherheitsmerkmals (101) bildet.

11. Dokument (300) nach einem der Ansprüche 9 oder 10, wobei die Materialschichten Kunststoffschichten, insbesondere laminierte Polycarbonat-Schichten, umfassen.

12. Dokument (300) nach einem der vorstehenden Ansprüche 7 bis 11, wobei die Trägerschicht (101) durch eine Kunststoffschicht des Dokumentenkörpers (301) gebildet ist.

13. Dokument (300) nach einem der vorstehenden Ansprüche 7 bis 12, wobei das Sicherheitsmerkmal (100) zwischen zwei Elektroden (303a-b) angeordnet ist, und wobei das Stimulationsfeld durch Anlegen einer elektrischen Spannung (203) an die Elektroden (303a-b) erzeugbar ist.

14. Verfahren (400) zum Überprüfen eines Sicherheitsmerkmals (100) nach einem der Ansprüche 1 bis 6, mit:
Beaufschlagen (401) des Sicherheitsmerkmals (100) mit einem Stimulationsfeld in einem ersten Zeitintervall (207), um die Molekularschicht (103) des Sicherheitsmerkmals (100) in einen Anregungszustand zu versetzen;
Änderung (403) des Stimulationsfeldes in einem zweiten Zeitintervall (209); und
Erfassen (405) einer elektrischen Eigenschaft des Sicherheitsmerkmals (100) in dem zweiten Zeitintervall (209).

## Claims

1. A security feature (100) for a document (300), the security feature (100) comprising:
a carrier layer (101); and
a molecular layer (103) arranged on the carrier layer (101), wherein the molecular layer (103) can be transferred into an excited state by a stimulation field, and wherein a characteristic property of the security feature (100) is determined by the change of the excited state in response to a change of the stimulation field, wherein the molecular layer (103) comprises a plurality of polymer chains (201a-d) or oriented molecules, which are arranged on the carrier layer (101) and are chemically or physically bonded to the carrier layer, wherein the oriented molecules or polymer chains (201a-d) are deflectable from a rest position in response to the stimulation field and are configured to return to the rest position when the stimulation field is reduced, and wherein the characteristic property is determined by the return of the oriented molecules or polymer chains (201a-d) to the rest position.

2. The security feature (100) according to claim 1, wherein the stimulation field is an electrical stimulation field, an electrostatic stimulation field, a magnetic stimulation field or an electromagnetic stimulation field.

3. The security feature (100) according to claim 1 or 2, wherein a change in the stimulation field causes a change in the orientation of dipole moments and thus a change in the orientation of the oriented molecules or polymer chains (201a-d), and wherein the change of the dipole moments determines the characteristic property of the security feature (100).

4. The security feature (100) according to one of the preceding claims, wherein the carrier layer (101) is a metal layer, in particular a gold or silver layer, a conductive oxide layer, a dielectric layer, a plastic layer, in particular a polycarbonate layer, or a semiconductor layer.

5. The security feature (100) according to one of the preceding claims, further comprising a dielectric housing (105) which surrounds the carrier layer (101) and the molecular layer (103).

6. The security feature (100) according to one of the preceding claims, wherein the change of the the excited state of the molecular layer (103) causes a change of an electrically detectable variable, in particular an electromagnetic field, and wherein the characteristic property can be detected by detecting the change of the electrically detectable variable.

7. A document (300), in particular an authentication document or a bank note, the document comprising:
a document body (301); and
the security feature (100) according to one of the preceding claims 1 to 6, wherein the security feature (100) is connected to the document body (301).

8. The document (300) according to claim 7, wherein the security feature (100) is formed flat over a width of the document body (301).

9. The document (300) according to claim 7 or 8, wherein the document body (301) is formed from layers of material, and wherein the security feature (100) is arranged between two material layers, or wherein the security feature (100) is arranged on a surface of the document body (301) or in a recess of the surface of the document body (301), in particular in a dielectric housing (105).

10. The document (300) according to claim 9, wherein the security feature (100) is embedded, in particular laminated, in a housing (105) between two successive material layers of the document body (301), or wherein a certain material layer of the document body (301) forms the carrier layer (101) of the security feature (101).

11. The document (300) according to one of the claims 9 or 10, wherein the material layers comprise plastic layers, in particular laminated polycarbonate layers.

12. The document (300) according to one of the preceding claims 7 to 11, wherein the carrier layer (101) is formed by a plastic layer of the document body (301).

13. The document (300) according to one of the preceding claims 7 to 12, wherein the security feature (100) is arranged between two electrodes (303a-b), and wherein the stimulation field can be generated by applying an electrical voltage (203) to the electrodes (303a-b).

14. A method (400) for verifying a security feature (100) according to one of the claims 1 to 6, the method comprising:
applying (401) the security feature (100) with a stimulation field in a first time interval (207) in order to transfer the molecular layer (103) of the security feature (100) into an excited state;
changing (403) the stimulation field in a second time interval (209); and
detecting (405) an electrical property of the security feature (100) in the second time interval (209).

## Revendications

1. Elément de sécurité (100) destiné à un document (300), ledit élément comprenant :
une couche de support (101) ; et
une couche moléculaire (103) qui est disposée sur la couche de support (101), la couche moléculaire (103) pouvant être mise dans un état d'excitation par un champ de stimulation, et une propriété caractéristique de l'élément de sécurité (100) étant déterminée par une modification de l'état d'excitation en réponse à une modification du champ de stimulation, la couche moléculaire (103) comportant une pluralité de chaînes polymères (201a-d) ou de molécules orientées qui sont disposées sur la couche de support (101) et qui sont liées chimiquement ou physiquement à la couche de support, les molécules orientées ou les chaînes de polymère (201a-d) pouvant être déviées d'une position de repos en réponse au champ de stimulation et étant conçues pour retourner à la position de repos lorsque le champ de stimulation est réduit, et la propriété caractéristique étant déterminée par le retour des molécules orientées ou des chaînes polymères (201a-d) dans la position de repos.

2. Elément de sécurité (100) selon la revendication 1, le champ de stimulation étant un champ de stimulation électrique, un champ de stimulation électrostatique, un champ de stimulation magnétique ou un champ de stimulation électromagnétique.

3. Elément de sécurité (100) selon la revendication 1 ou 2, une modification du champ de stimulation entraînant une modification de l'orientation des moments dipolaires et donc une modification de l'orientation des molécules orientées ou des chaînes polymères (201a-d), et la modification des moments dipolaires déterminant la propriété caractéristique de l'élément de sécurité (100).

4. Elément de sécurité (100) selon l'une des revendications précédentes, la couche de support (101) étant une couche métallique, notamment une couche d'or ou d'argent, une couche d'oxyde conducteur, une couche diélectrique, une couche de matière synthétique, notamment une couche de polycarbonate, ou une couche de semi-conducteur.

5. Elément de sécurité (100) selon l'une des revendications précédentes, comprenant en outre un boîtier diélectrique (105) qui entoure la couche de support (101) et la couche moléculaire (103).

6. Elément de sécurité (100) selon l'une des revendications précédentes, la modification de l'état d'excitation de la couche moléculaire (103) provoquant une modification d'une grandeur électriquement détectable, en particulier d'un champ électromagnétique, et la propriété caractéristique pouvant être détectée par détection de la modification de la grandeur électriquement détectable.

7. Document (300), en particulier un document d'authentification ou un billet de banque, comprenant :
un corps de document (301) ; et
l'élément de sécurité (100) selon l'une des revendications précédentes 1 à 6, l'élément de sécurité (100) étant relié au corps de document (301).

8. Document (300) selon la revendication 7, l'élément de sécurité (100) étant de forme sensiblement bidimensionnelle sur une largeur du corps de document (301) .

9. Document (300) selon la revendication 7 ou 8, le corps de document (301) étant formé de couches de matière, et l'élément de sécurité (100) étant disposé entre deux couches de matière, ou l'élément de sécurité (100) étant disposé sur une surface du corps de document (301) ou le corps de document (301) étant disposé dans un évidement de la surface, en particulier dans un boîtier diélectrique (105).

10. Document (300) selon la revendication 9, l'élément de sécurité (100) étant noyé, notamment incorporé par stratification, dans un boîtier (105) entre deux couches de matière successives du corps de document (301), ou une couche de matière déterminée du corps de document (301) formant la couche de support (101) de l'élément de sécurité (101).

11. Document (300) selon l'une des revendications 9 ou 10, les couches de matière comprenant des couches de matière synthétique, notamment des couches de polycarbonate stratifiées.

12. Document (300) selon l'une des revendications 7 à 11 précédentes, la couche de support (101) étant formée par une couche de matière synthétique du corps de document (301).

13. Document (300) selon l'une des revendications 7 à 12 précédentes, l'élément de sécurité (100) étant disposé entre deux électrodes (303a-b), et le champ de stimulation pouvant être généré par application d'une tension électrique (203) sur les électrodes (303a-b).

14. Procédé (400) de contrôle d'un élément de sécurité (100) selon l'une des revendications 1 à 6, le procédé comprenant les étapes suivantes :
soumettre (401) l'élément de sécurité (100) à un champ de stimulation dans un premier intervalle de temps (207) afin de mettre la couche moléculaire (103) de l'élément de sécurité (100) dans un état d'excitation ;
modifier (403) le champ de stimulation dans un deuxième intervalle de temps (209) ; et
détecter (405) une propriété électrique de l'élément de sécurité (100) dans le deuxième intervalle de temps (209) .
